# EUROPÄISCHE PATENTSCHRIFT

(11) **EP 1 961 616 B1**
(45) Veröffentlichungstag und Bekanntmachung des Hinweises auf die Patenterteilung: **10.04.2013**
(21) Anmeldenummer: 08001204.0
(22) Anmeldetag: 23.01.2008
(51) Int. Cl.: B60R 13/02, B60R 11/02, F16B 19/10, F16B 21/02, F16B 5/06, B60R 11/00, B60R 13/06, F16B 21/09

(54) **Befestigungsvorrichtung**
Attachment device
Dispositif de fixation

(30) Priorität: 22.02.2007 DE 202007002595 U
(43) Veröffentlichungstag der Anmeldung: 27.08.2008
(73) Patentinhaber: TRW Automotive Electronics & Components GmbH, 78315 Radolfzell (DE)
(72) Erfinder: Jatzke, Stefan, 67280 Ebertsheim (DE); Hofmann, Jürgen, 67304 Eisenberg (DE); Loewe, Hubert, 66919 Weselberg (DE)
(74) Vertreter: Prinz & Partner

(56) Entgegenhaltungen:
- EP-A- 0 937 898
- DE-A1- 19 753 678
- FR-A- 1 520 165
- FR-A- 2 670 253
- GB-A- 2 335 951
- US-A- 4 732 519

## Beschreibung

Die Erfindung betrifft eine Befestigungsvorrichtung zur Befestigung eines Modulträgers und eines Verkleidungsteils an einem Rohbauteil, beispielsweise einem Türblech, eines Kraftfahrzeugs.

Modulträger dienen üblicherweise zur Befestigung von in einer Kraftfahrzeugtür integrierten mechanischen und/oder elektrischen Bedienungs- und Steuermodulen, wie beispielsweise von Fensterhebern. Die zur Zeit verwendeten Modulträger sind Aluminiumteile, die an dem Rohbauteil der Fahrzeugtür mit Metallblindnieten befestigt sind. Durch diese Art der Befestigung kann eine Welligkeit des Modulträgers entstehen, aus der eine Undichtigkeit resultieren kann.

Die Befestigung der Türinnenverkleidung am Rohbauteil der Fahrzeugtür erfolgt üblicherweise durch am Verkleidungsteil angebrachte Befestigungselemente, die lösbar mit dem Rohbauteil wie einem Türblech verbunden werden.

Die DE 197 53 678 A1 zeigt eine Befestigungsvorrichtung mit einem Befestigungsclip und einem Modulträgerteil, wobei das Modulträgerteil eine Öffnung zur Aufnahme des Befestigungsclips aufweist. Der Befestigungsclip weist einen Schaft und ein an den Schaft angeformtes Kopfteil auf. Des Weiteren weist der Befestigungsclip am Schaft unterhalb des Kopfteils vorgesehene Verriegelungselemente auf, die in die Öffnung des Modulträgerteils eingreifen und den Befestigungsclip an dem Modulträgerteil festlegen.

In der GB 2 335 951 A ist eine Befestigungsvorrichtung gezeigt, mit einem Befestigungsclip, der durch Öffnungen von zwei aneinander liegenden Bauteilen geführt werden kann und durch einen Pin derart aufgespreizt werden kann, dass die Bauteile aneinander fixiert sind. Des Weiteren ist eine Dichtung vorgesehen, die den Befestigungsclip in Umfangsrichtung umschließt und die Öffnung der Bauteile abdichten kann.

Aufgabe der vorliegenden Erfindung ist die Bereitstellung einer Befestigungsvorrichtung, mit der sowohl der Modulträger als auch das Verkleidungsteil gemeinsam am Rohbauteil lösbar befestigt werden und mit dem durch die Vereinfachung der Arbeitsschritte bei der Befestigung des Modulträgers und der Türinnenverkleidung die Montagezeit und damit auch die Montagekosten reduziert werden können.

Die erfindungsgemäße Befestigungsvorrichtung umfaßt einen Befestigungsclip, ein Modulträgerteil mit einer Öffnung zur Aufnahme des Befestigungsclips und ein Befestigungselement eines Verkleidungsteils, wobei der Befestigungsclip einen Schaft und ein an den Schaft angeformtes Kopfteil aufweist. Am Schaft unterhalb des Kopfteils sind Verriegelungselemente vorgesehen, die in die Öffnung des Modulträgerteils eingreifen und den Befestigungsclip an dem Modulträgerteil festlegen. Das Kopfteil weist eine Aufnahme für das Befestigungselement auf. Des Weiteren weist der Schaft ein oder mehrere Rastelemente zur Aufnahme in einer Bohrung eines Rohbauteils auf.

In einer bevorzugten Ausführungsform stellt die Erfindung eine mehrteilige Befestigungsvorrichtung bereit, die Rastelemente zur Befestigung an der

Fahrzeugkarosserie im Unterteil des Befestigungsclips, insbesondere zur Aufnahme in einer Bohrung eines Rohbauteils der Fahrzeugkarrosserie und eine Aufnahmebohrung im Kopfteil des Befestigungsclips mit weiteren Rastelementen für ein stiftförmiges Befestigungselement aufweist, das die Türverkleidung hält. Das Modulträgerteil kann aus Kunststoff gebildet sein. Die erfindungsgemäße Befestigungsvorrichtung ermöglicht eine mehrmalige zerstörungsfreie Demontierbarkeit. Ferner werden durch die Vereinfachung der Arbeitsschritte bei der Befestigung des Modulträgers und der Türverkleidung die Montagezeit und damit die Montagekosten reduziert.

Vorteilhafte Ausgestaltungen der Erfindung sind in den Unteransprüchen angegeben. Insbesondere können die Verriegelungselemente durch einen oder mehrere radial vom Schaft vorstehende Vorsprünge gebildet sein. Dies ermöglicht eine schnelle und sichere Festlegung des Befestigungsclips am Modulträgerteil nach Art eines Bajonettverschlusses.

Das Kopfteil des Befestigungsclips weist vorzugsweise ein scheibenförmiges Element mit einer umlaufenden Dichtung zur Abdichtung der Öffnung im Kopfteil auf. Außerdem kann das Kopfteil einen Antriebsabschnitt mit einem Außenkant aufweisen.

Die Öffnung im Modulträgerteil korrespondiert vorzugsweise mit der Form der Verriegelungselemente am Schaft des Befestigungsclips. Ferner kann das Modulträgerteil einen Anschlag für die Verriegelungselemente aufweisen. Des weiteren kann ein Flansch zur dichten Anlage des Modulträgerteils an dem Rohbauteil der Fahrzeugkarosserie vorgesehen sein.

Der Befestigungsclip und das Modulträgerteil bilden vorzugsweise eine vormontierte Einheit. Dadurch wird der Einbau im Fahrzeug wesentlich erleichtert.

Das Befestigungselement des Verkleidungsteils weist vorzugsweise einen stiftförmigen Abschnitt auf, der in die Aufnahme des Kopfteils eingreift. Der Schaft des Befestigungsclips kann dabei einen mit der Aufnahme im Kopfteil korrespondierenden Hohlraum aufweisen, so daß der stiftförmige Abschnitt des Befestigungselementes in den Hohlraum eingreift. Ferner kann der stiftförmige Abschnitt einen Rastring umfassen, mit dem der stiftförmige Abschnitt in der Aufnahme im Kopfteil festgelegt ist.

Zur Abdichtung des stiftförmigen Abschnitts gegen die Öffnung im Modulträger kann der stiftförmige Abschnitt eine Dichtung aufweisen. Darüber hinaus kann der Rastring eine Dichtlippe umfassen, die den stiftförmigen Abschnitt gegen die Aufnahme im Kopfteil abdichtet.

Der Befestigungsclip und das Modulträgerteil sind vorzugsweise aus Kunststoff gebildet. Dies ermöglicht die einfache und kostengünstige Herstellung im Spritzgußverfahren. Das Befestigungselement für das Verkleidungsteil kann schließlich ein Kopfteil mit Toleranzausgleichsmitteln aufweisen.

In den beigefügten Zeichnungen zeigen
- Figur 1 den Befestigungsclip der erfindungsgemäßen Befestigungsvorrichtung sowie das stiftförmige Befestigungselement für die Türverkleidung;
- Figur 2a das Einführen des Befestigungsclips in die Öffnung des Modulträgers;
- Figur 2b eine Ansicht von der Unterseite des Modulträgers mit eingeführtem Befestigungsclip;
- Figur 3 die Verriegelung des Befestigungsclips am Modulträger durch Drehen des Befestigungsclips über einen Achtkant in der Öffnung um 90° im Uhrzeigersinn bis zu einem Anschlag;
- Figur 4 die Montage des Modulträgers mit dem Befestigungsclip in einer Öffnung im Türblech mittels Rastelementen;
- Figur 5 eine schematische Ansicht des vormontierten Modulträgers im Türblech;
- Figur 6 die Montage der Türverkleidung (nicht dargestellt) mit vormontiertem Befestigungselement (Pin) in den Modulträger;
- Figur 7 die Zentrierung des stiftförmigen Befestigungselements im Modulträger über die Aufnahme im Kopfteil des Befestigungsclips mit einer Fase;
- Figur 8 den Sitz des stiftförmigen Befestigungselements für die Türverkleidung im Modulträger und Türblech in einer schematischen Darstellung;
- Figur 9 eine Schnittansicht zur Funktionsbeschreibung einzelner Bestandteile der erfindungsgemäßen Befestigungsvorrichtung.

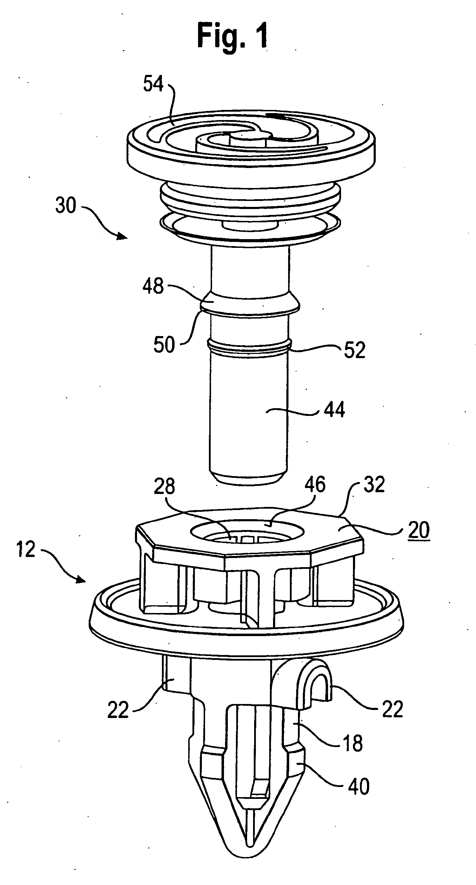

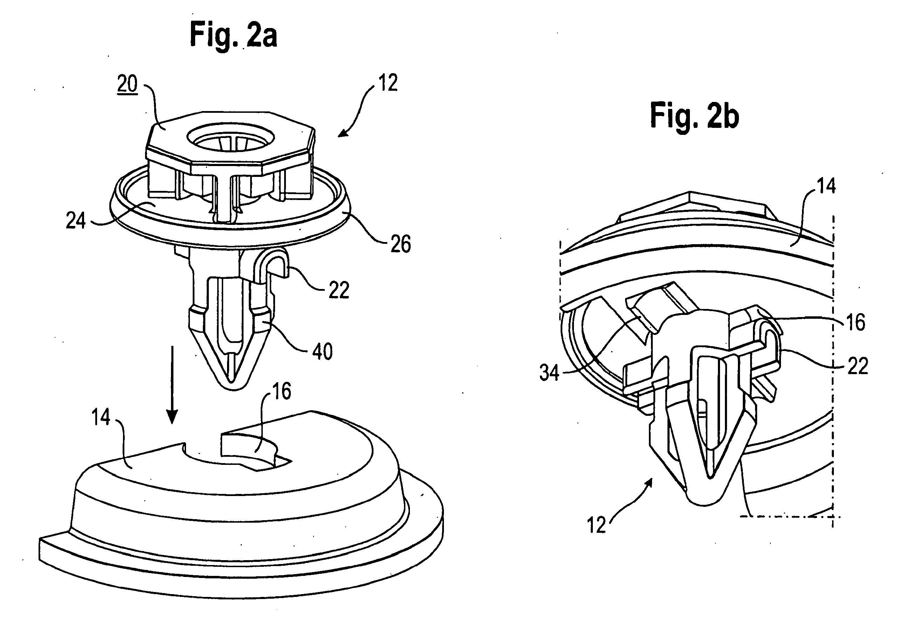

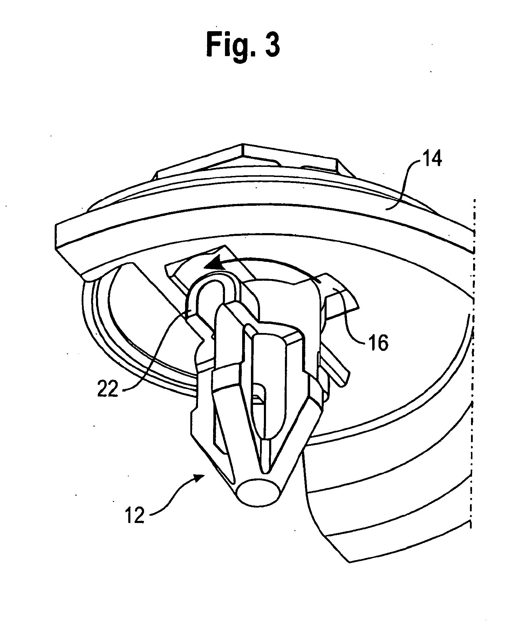

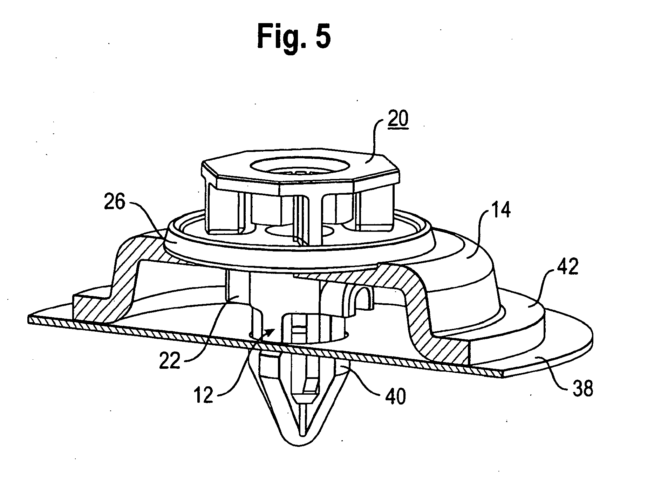

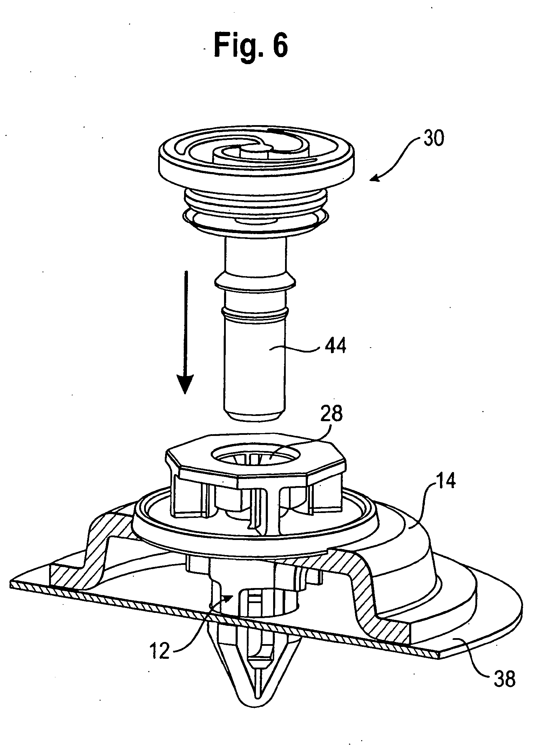

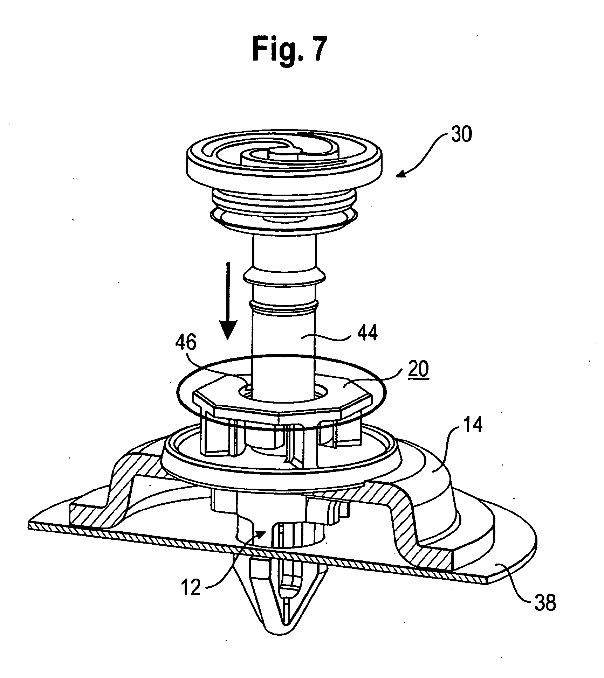

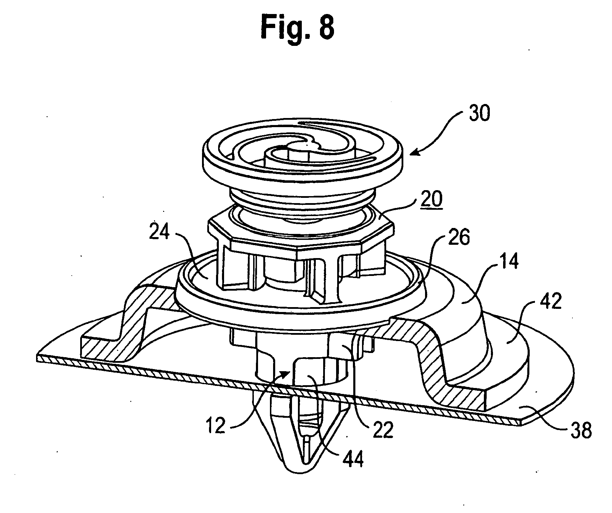

Wie in den beigefügten Zeichnungen, Figuren 1 bis 9, anhand einer bevorzugten Ausführungsform gezeigt ist, weist die erfindungsgemäße Befestigungsvorrichtung einen Befestigungsclip 12 und ein Modulträgerteil 14 auf. Im Modulträgerteil 14 ist eine Öffnung 16 zur Aufnahme des Befestigungsclips 12 vorgesehen. Der Befestigungsclip 12 weist einen Schaft 18 und ein an den Schaft angeformtes Kopfteil 20 auf. Unterhalb des Kopfteils 20 sind am Schaft 18 Verriegelungselemente 22 vorgesehen, die in die Öffnung 16 des Modulträgerteils 14 eingreifen und den Befestigungsclip 12 an dem Modulträgerteil 14 festlegen (Figuren 1 bis 3).

Die Verriegelungselemente 22 sind vorzugsweise durch einen oder mehrere radial vom Schaft 18 vorstehende Vorsprünge gebildet. Das Kopfteil 20 des Befestigungsclips 12 kann ferner ein scheibenförmiges Element 24 mit einer umlaufenden Dichtung 26 aufweisen. Im montierten Zustand wird die Öffnung 16 des Modulträgers 14 mit dem scheibenförmigen Element und der umlaufenden Dichtung 26 abgedichtet.

Im Kopfteil 20 ist eine Aufnahme 28 für ein mit dem Bezugszeichen 30 bezeichnetes Befestigungselement eines Verkleidungsteils (nicht dargestellt) gebildet. Darüber hinaus weist das Kopfteil einen Antriebsabschnitt 32 mit einem Außenkant auf, der in der gezeigten Ausführungsform als Achtkant ausgestaltet ist. Über den Antriebsabschnitt kann der in das Modulträgerteil 14 eingebrachte Befestigungsclip 12 verdreht und am Modulträgerteil 14 verriegelt werden. An der Unterseite des Modulträgerteils 14 ist vorzugsweise ein Anschlag 34 gebildet, der die Verdrehung der Verriegelungselemente 22 begrenzt und die Position des Befestigungsclips 12 im Modulträgerteil 14 definiert.

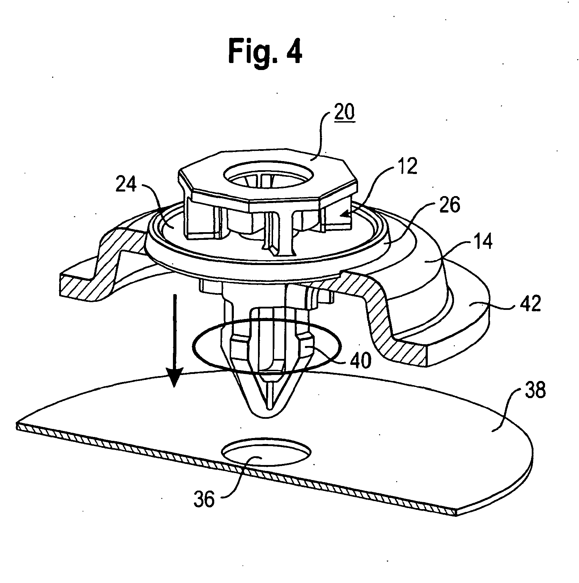

Wie in Figur 4 dargestellt, wird der Befestigungsclip 12 mit dem Modulträgerteil 14 als vormontierte Einheit in die Bohrung 36 eines Türblechs 38 eingesetzt. Über Rastelemente 40 am Schaft 18 wird der Modulträger 14 mit dem Befestigungsclip 12 in der Bohrung 36 des Türblechs 38 gehalten. Der Modulträger 14 weist einen Flansch 42 auf, mit dem er im montierten Zustand dicht am Türblech 38 anliegt.

Das Befestigungselement 30 des Verkleidungsteils umfaßt einen stiftförmigen Abschnitt 44, mit dem es in die Aufnahme 28 im Kopfteil 20 des Befestigungsclips 12 eingreift. Über eine Fase 46 in der Aufnahme 28 erfolgt eine Zentrierung des Befestigungselements 30.

Der stiftförmige Abschnitt 44 des Befestigungselements weist ferner einen Rastring 48 auf, mit dem der stiftförmige Abschnitt 44 in der Aufnahme 28 im Kopfteil festgelegt ist. Der Rastring kann zusätzlich mit einer Dichtlippe 50 versehen sein, die den stiftförmigen Abschnitt 44 gegen die Aufnahme 28 im Kopfteil 12 abdichtet. Des weiteren kann der stiftförmige Abschnitt 44 einen Dichtring 52 in Form eines O-Rings aufweisen, der im montierten Zustand den stiftförmigen Abschnitt 44 zur Öffnung 16 im Modulträger abdichtet.

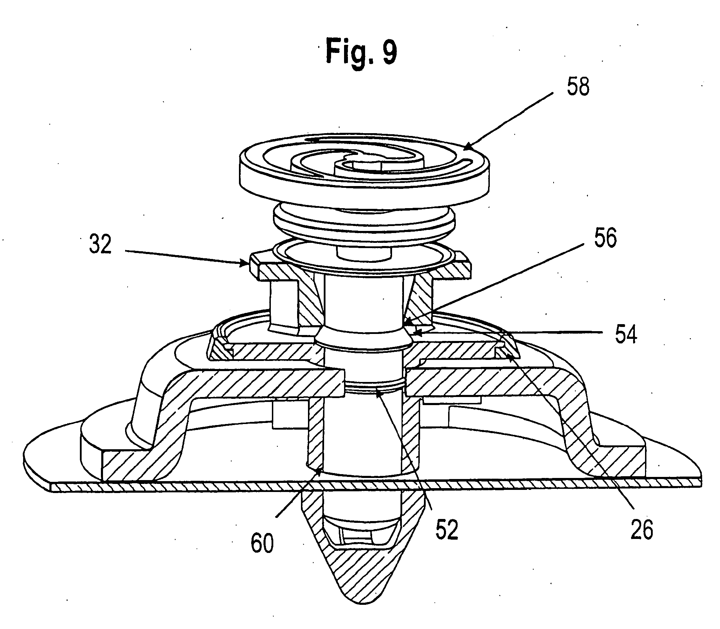

Schließlich kann das Befestigungselement 30 ein Kopfteil mit Toleranzausgleichsmitteln 58 zum Einlegevorbau der Türverkleidung hin aufweisen, die in Fig. 9 mit dem Bezugszeichen 58 versehen sind.

In Figur 9 ist mit dem Bezugszeichen 32 der Antriebsabschnitt des Kopfteils 20 bezeichnet. Der Antriebsabschnitt 32 ist als Achtkant ausgebildet und dient der Montage des Befestigungsclips 12 in dem Modulträgerteil 14. Ein Anschlag im Befestigungsclip 12 ist mit dem Bezugszeichen 54 versehen.

Die Verrastung des Befestigungselementes 30 im Befestigungsclip 12 ist mit dem Bezugszeichen 56 versehen. Die erwartete Auszugskraft nach der Verrastung des Befestigungselementes 30 beträgt etwa 130 N.

Die Dichtung am Befestigungselement 30, die im montierten Zustand das Befestigungselement 30 zum Befestigungsclip 12 abdichtet, ist mit dem Bezugszeichen 52 versehen.

In Figur 9 ist ferner die umlaufende Dichtung 26 des Befestigungsclips 12 gezeigt. Die Dichtung 26 dichtet im montierten Zustand den Befestigungsclip 12 zum Modulträgerteil 14 ab.

Mit dem Bezugszeichen 60 ist die Sicherung der Rastelemente 40 durch das Befestigungselement 30 in der Endmontagestellung bezeichnet. Die erwartete Auszugskraft des Befestigungsclips 12 aus dem Türblech 38 ist größer als 250 N. Die Auszugskraft des Befestigungselementes 30 aus dem Befestigungsclip 12 sollte geringer sein, als die Auszugskraft des Befestigungsclips 12 aus dem Türblech 38.

## Patentansprüche

1. Befestigungsvorrichtung zur Befestigung eines Modulträgers und eines Verkleidungsteils an einem Rohbauteil (38) eines Kraftfahrzeugs, mit einem Befestigungsclip (12), einem Modulträgerteil (14) mit einer Öffnung (16) zur Aufnahme des Befestigungsclips (12), und einem Befestigungselement (30) für das Verkleidungsteil, wobei der Befestigungsclip (12) einen Schaft (18) und ein an den Schaft (18) angeformtes Kopfteil (20) aufweist und wobei Verriegelungselemente (22) am Schaft (18) unterhalb des Kopfteils (20) vorgesehen sind, die in die Öffnung (16) des Modulträgerteils (14) eingreifen und den Befestigungsclip (12) an dem Modulträgerteil (14) festlegen, **dadurch gekennzeichnet, dass** das Kopfteil (20) eine Aufnahme (28) für das Befestigungselement (30) aufweist, und der Schaft (18) ein oder mehrere Rastelemente (40) zur Aufnahme in einer Bohrung (36) eines Rohbauteils (38) aufweist.

2. Befestigungsvorrichtung nach Anspruch 1, **dadurch gekennzeichnet, daß** die Verriegelungselemente (40) durch einen oder mehrere radial vom Schaft (18) vorstehende Vorsprünge gebildet sind.

3. Befestigungsvorrichtung nach einem der vorhergehenden Ansprüche, **dadurch gekennzeichnet, daß** das Kopfteil (20) ein scheibenförmiges Element (24) mit einer umlaufenden Dichtung (26) zur Abdichtung der Öffnung (16) im Kopfteil (20) aufweist.

4. Befestigungsvorrichtung nach einem der vorhergehenden Ansprüche, **dadurch gekennzeichnet, daß** das Kopfteil (20) einen Antriebsabschnitt (32) mit einem Außenkant aufweist.

5. Befestigungsvorrichtung nach einem der vorhergehenden Ansprüche, **dadurch gekennzeichnet, daß** das Modulträgerteil (14) einen Anschlag (34) für die Verriegelungselemente (22) aufweist.

6. Befestigungsvorrichtung nach einem der vorhergehenden Ansprüche, **dadurch gekennzeichnet, daß** das Modulträgerteil (14) einen Flansch (42) zur dichten Anlage an dem Rohbauteil (38) aufweist.

7. Befestigungsvorrichtung nach einem der vorhergehenden Ansprüche, **dadurch gekennzeichnet, daß** die Öffnung (16) im Modulträgerteil (14) mit der Form der Verriegelungselemente (22) korrespondiert.

8. Befestigungsvorrichtung nach einem der vorhergehenden Ansprüche, **dadurch gekennzeichnet, daß** der Befestigungsclip (12) und das Modulträgerteil (14) eine vormontierte Einheit bilden.

9. Befestigungsvorrichtung nach einem der vorhergehenden Ansprüche, **dadurch gekennzeichnet, daß** das Befestigungselement (30) für das Verkleidungsteil einen stiftförmigen Abschnitt (44) aufweist, der in die Aufnahme (28) des Kopfteils (20) eingreift.

10. Befestigungsvorrichtung nach Anspruch 9, **dadurch gekennzeichnet, daß** der Schaft (18) einen mit der Aufnahme (28) im Kopfteil (20) korrespondierenden Hohlraum aufweist und der stiftförmige Abschnitt (44) des Befestigungselementes (30) in den Hohlraum eingreift.

11. Befestigungsvorrichtung nach einem der Ansprüche 9 oder 10, **dadurch gekennzeichnet, daß** der stiftförmige Abschnitt (44) einen Rastring (48) aufweist, mit dem der stiftförmige Abschnitt (44) in der Aufnahme (28) im Kopfteil (20) festgelegt ist.

12. Befestigungsvorrichtung nach einem der Ansprüche 9 bis 11, **dadurch gekennzeichnet, daß** der stiftförmige Abschnitt (44) eine Dichtung (52) aufweist, die den stiftförmigen Abschnitt (44) zur Öffnung (16) im Modulträger abdichtet.

13. Befestigungsvorrichtung nach einem der Ansprüche 11 oder 12, **dadurch gekennzeichnet, daß** der Rastring (48) eine Dichtlippe (50) aufweist, die den stiftförmigen Abschnitt (44) gegen die Aufnahme (28) im Kopfteil (20) abdichtet.

14. Befestigungsvorrichtung nach einem der vorhergehenden Ansprüche, **dadurch gekennzeichnet, daß** der Befestigungsclip (12) und das Modulträgerteil (14) aus Kunststoff gebildet sind.

15. Befestigungsvorrichtung nach einem der vorhergehenden Ansprüche, **dadurch gekennzeichnet, daß** das Befestigungselement (30) für das Verkleidungsteil ein Kopfteil mit Toleranzausgleichsmitteln (58) aufweist.

## Claims

1. A fastening device for fastening a module support and a panelling part to a body shell part (38) of a motor vehicle, comprising a fastening clip (12), a module support part (14) having an opening (16) to receive the fastening clip (12), and a fastening element (30) for the panelling part, the fastening clip (12) having a shaft (18) and a head part (20) moulded integrally with the shaft (18), and locking elements (22) being provided on the shaft (18) underneath the head part (20) which engage into the opening (16) of the module support part (14) and secure the fastening clip (12) on the module support part (14), **characterized in that** the head part (20) has a mounting (28) for the fastening element (30), and the shaft (18) has one or more detent elements (40) for mounting in a bore (36) of a body shell part (38).

2. The fastening device according to claim 1, **characterized in that** the locking elements (40) are formed by one or more projections protruding radially from the shaft (18).

3. The fastening device according to either of the preceding claims, **characterized in that** the head part (20) has a disc-shaped element (24) with a circumferential seal (26) for sealing the opening (16) in the head part (20).

4. The fastening device according to any of the preceding claims, **characterized in that** the head part (20) has a drive section (32) with a polygonal outer edge.

5. The fastening device according to any of the preceding claims, **characterized in that** the module support part (14) has a stop (34) for the locking elements (22).

6. The fastening device according to any of the preceding claims, **characterized in that** the module support part (14) has a flange (42) for tight abutment against the body shell part (38).

7. The fastening device according to any of the preceding claims, **characterized in that** the opening (16) in the module support part (14) corresponds to the shape of the locking elements (22).

8. The fastening device according to any of the preceding claims, **characterized in that** the fastening clip (12) and the module support part (14) form a pre-assembled unit.

9. The fastening device according to any of the preceding claims, **characterized in that** the fastening element (30) for the panelling part has a pin-shaped section (44) which engages into the mounting (28) of the head part (20).

10. The fastening device according to claim 9, **characterized in that** the shaft (18) has a cavity corresponding to the mounting (28) in the head part (20) and the pin-shaped section (44) of the fastening element (30) engages into the cavity.

11. The fastening device according to either of claims 9 or 10, **characterized in that** the pin-shaped section (44) has a detent ring (48) by which the pin-shaped section (44) is secured in the mounting (28) in the head part (20).

12. The fastening device according to any of claims 9 to 11, **characterized in that** the pin-shaped section (44) has a seal (52) which seals the pin-shaped section (44) in relation to the opening (16) in the module support.

13. The fastening device according to either of claims 11 or 12, **characterized in that** the detent ring (48) has a sealing lip (50) which seals the pin-shaped section (44) against the mounting (28) in the head part (20).

14. The fastening device according to any of the preceding claims, **characterized in that** the fastening clip (12) and the module support part (14) are formed from plastic.

15. The fastening device according to any of the preceding claims, **characterized in that** the fastening element (30) for the panelling part has a head part having tolerance equalizing means (58).

## Revendications

1. Dispositif de fixation pour la fixation d'un support de module et d'une pièce de revêtement sur un composant (38) non travaillé d'un véhicule automobile, comportant un clip de fixation (12), une pièce de support de module (14) présentant un orifice (16) pour la réception du clip de fixation (12), et un élément de fixation (30) pour la pièce de revêtement, le clip de fixation (12) présentant une tige (18) et une pièce de tête (20) moulée avec la tige (18), et des éléments de verrouillage (22) étant prévus sur la tige (18) au-dessous de la pièce de tête (20), lesquels s'engagent dans l'orifice (16) de la pièce de support de module (14) et bloquent le clip de fixation (12) sur la pièce de support de module (14), **caractérisé en ce que** la pièce de tête (20) présente un logement (28) pour l'élément de fixation (30), et **en ce que** la tige (18) présente un ou plusieurs éléments d'enclenchement (40) pour la réception dans un alésage (36) d'un composant (38) non travaillé.

2. Dispositif de fixation selon la revendication 1, **caractérisé en ce que** les éléments de verrouillage (40) sont formés par un ou plusieurs taquets faisant radialement saillie de la tige (18).

3. Dispositif de fixation selon l'une des revendications précédentes, **caractérisé en ce que** la pièce de tête (20) comporte un élément (24) en forme de disque qui présente un joint d'étanchéité (26) circonférentiel pour étancher l'orifice (16) dans la pièce de tête (20).

4. Dispositif de fixation selon l'une des revendications précédentes, **caractérisé en ce que** la pièce de tête (20) présente un tronçon d'entraînement (32) à pans extérieurs.

5. Dispositif de fixation selon l'une des revendications précédentes, **caractérisé en ce que** la pièce de support de module (14) présente une butée (34) pour les éléments de verrouillage (22).

6. Dispositif de fixation selon l'une des revendications précédentes, **caractérisé en ce que** la pièce de support de module (14) présente une bride (42) pour l'appui étanche sur le composant (38) non travaillé.

7. Dispositif de fixation selon l'une des revendications précédentes, **caractérisé en ce que** l'orifice (16) dans la pièce de support de module (14) correspond à la forme des éléments de verrouillage (22).

8. Dispositif de fixation selon l'une des revendications précédentes, **caractérisé en ce que** le clip de fixation (12) et la pièce de support de module (14) forment une unité pré-montée.

9. Dispositif de fixation selon l'une des revendications précédentes, **caractérisé en ce que** l'élément de fixation (30) pour la pièce de revêtement présente un tronçon (44) en forme de pion qui s'engage dans le logement (28) de la pièce de tête (20).

10. Dispositif de fixation selon la revendication 9, **caractérisé en ce que** la tige (18) présente une cavité correspondant au logement (28) dans la pièce de tête (20) et **en ce que** le tronçon (44) en forme de pion de l'élément de fixation (30) s'engage dans la cavité.

11. Dispositif de fixation selon l'une des revendications 9 ou 10, **caractérisé en ce que** le tronçon (44) en forme de pion présente un anneau d'enclenchement (48) au moyen duquel le tronçon (44) en forme de pion est bloqué dans le logement (28) dans la pièce de tête (20).

12. Dispositif de fixation selon l'une des revendications 9 à 11, **caractérisé en ce que** le tronçon (44) en forme de pion présente un joint d'étanchéité (52) qui étanche le tronçon (44) en forme de pion par rapport à l'orifice (16) dans le support de module.

13. Dispositif de fixation selon l'une des revendications 11 ou 12, **caractérisé en ce que** l'anneau d'enclenchement (48) présente une lèvre d'étanchéité (50) qui étanche le tronçon (44) en forme de pion par rapport au logement (28) dans la pièce de tête (20).

14. Dispositif de fixation selon l'une des revendications précédentes, **caractérisé en ce que** le clip de fixation (12) et la pièce de support de module (14) sont réalisés en matière plastique.

15. Dispositif de fixation selon l'une des revendications précédentes, **caractérisé en ce que** l'élément de fixation (30) pour la pièce de revêtement comporte une pièce de tête qui présente des moyens (58) de compensation de tolérance.
